# EUROPEAN PATENT SPECIFICATION

(11) **EP 2 533 940 B1**
(45) Date of publication and mention of the grant of the patent: **23.10.2013**
(21) Application number: 11711650.9
(22) Date of filing: 08.02.2011
(51) Int. Cl.: B23Q 39/02

(54) **MULTIFUNCTION MODULAR MACHINE TOOL FOR INTEGRATED MACHINING PROCESSES**
MULTIFUNKTIONALE MODULARE WERKZEUGMASCHINE FÜR EINEN INTEGRIERTE BEARBEITUNG
MACHINE-OUTIL MODULAIRE MULTIFONCTION POUR PROCÉDÉS D'USINAGE INTÉGRÉS

(30) Priority: 08.02.2010 IT RM20100042
(43) Date of publication of application: 19.12.2012
(73) Proprietor: Nuova Trasmissione S.r.L., 31058 Susegana (TV) (IT)
(72) Inventor: ONGARO, Stefano, I-31058 Susegana (TV) (IT)
(74) Representative: Locas, Davide
(86) International application number: PCT/IB2011/050531
(87) International publication number: WO 2011/095957

(56) References cited:
- EP-A1- 1 190 792
- EP-A1- 1 574 273
- EP-A1- 1 726 387
- EP-A2- 1 193 027
- WO-A1-2006/106137
- WO-A1-2007/012351
- US-A- 5 127 140

## Description

The present invention relates to a multifunction modular machine tool for integrated machining processes, of the type which has at least two work units capable of carrying out two different machining processes on a workpiece in a single hold.

In the field of mechanical chip-forming machining, there is a great need to have available a single machine which makes it possible to carry out a series of different machining processes on a workpiece to be machined.

As may be easily understood, in the production of mechanical workpieces which require different machining processes, for example turning, gear cutting and other types of milling, the step of positioning each workpiece on the machine intended for the specific machining process requires rather significant amounts of time. Consequently, the use of different machines for consecutive machining processes on a single workpiece takes a long time, with a considerable loss of productivity.

Even the use of automatic movement systems does not prove fully effective, both because the cost and complexity of such systems is rather high, and because provision must inevitably be made for a certain tolerance in the positioning on the machine for the next machining process.

In recent years, machine tools have therefore been developed which make it possible to carry out more than one machining process on a workpiece to be machined in a single hold, that is, without the need to move the workpiece and carry out further positioning in another work station.

An example of such machines is described in European Patent EP 832 716, from the same inventor as the present application. In particular, a digitally controlled machine tool is described which is capable of carrying out turning and gear cutting operations in a single hold.

The machine, in addition to the headstock and the tailstock for holding and rotating the workpiece, comprises two pairs of guides which respectively support a turning unit, or a toolholder turret for other types of machining process, and a gear cutting unit, which supports a hobbing tool. However, while solving the aforesaid problems with reference to the workpieces for which a turning or milling process is required, and a gear cutting process, it does not make it possible to carry out bevel gear cutting, if not using cone hobs, and other types of machining process different from those listed above. In particular, therefore, the structure of the machine was designed to satisfy particular operating requirements and is not easily adaptable to the various requirements.

Another example of a machine tool which permits machining processes of different types, and described in European Patent EP 1 910 003, also has two different guides respectively comprising a lathe and, in this case, a unit for machining bevel gearwheels by means of knife tools. In order to provide that capability, the work unit intended for the production of the bevel gearwheel may be inclined with respect to the generation axis of the length of the mechanical workpiece, therefore permitting the positioning of the tool according to the machining process required. In this case, however, only knife gear cutting is permitted and, once again, it lacks the capacity for adapting itself to different machining processes according to requirements.

A multifunction machine tool is also described in European Patent Application EP 810 048, in which a plurality of tools are mounted on a work unit, being placed on top of one another. Such an arrangement, however, requires dedicated designing of the work unit, depending on the types of machining processes required or, alternatively, the presence of an excessively large number of tools, also when they are not required. In other words, the machine does not have any capacity for modularity, understood as the possibility of producing a machine of simple structure, capable of carrying out specific machining processes on a workpiece by means of the use of specific work units on a common base structure. In addition, the machine does not permit the simultaneous use of a number of work units on the workpiece. On the other hand, the patent does not describe how the movement of the tools takes place for the specific machining processes, while the structure described does not seem capable of carrying out numerous machining operations on the workpiece.

Yet another example of a multifunction machine is described in the United States patent US 6.618.917, in which a machine is illustrated which comprises, arranged on the same carriage, a toolholder turret, for example for turning, and a gear cutting unit.

The two units can move on a guide perpendicular to the axis of rotation of the workpiece, in such a way as to alternately approach the workpiece and carry out machining on it.

In this case also, no modularity is provided for the machine, nor is the simultaneous use of a number of work units on the workpiece permitted. In addition, the movement of the assembly formed by the two units involves significant difficulty, it being an element, with non-standard features, of large dimensions and heavy weight.

Moreover, in general, in these latter multifunction machines and in other types of machines, such as for example those described in WO 2006/106137, EP 1 574 273, EP 1 726 387, EP 1 193 027, EP 1 190 792 and US 5.127.140, it is not possible to obtain work performances comparable to those which would be obtained by means of the use of two separate machines, in that they require suitable multifunction work units which, because of bulkiness, weight and technical characteristics cannot achieve the same performances as conventional machines.

A further problem connected with the machines described previously or in any case known from the patents listed above, lies in the impossibility of obtaining complex workpieces which require the machining processes of turning, gear cutting and screw milling, none of them being capable of turning, milling and gear cutting a mechanical component with a single hold of the workpiece. Therefore, the technical problem underlying the present invention is that of providing a cutting machine which makes it possible to remedy the drawbacks mentioned above with reference to the prior art.

The problem is solved by the multifunction modular machine tool for integrated machining processes according to claim 1.

Secondary features of the present invention are defined in the corresponding dependent claims.

The present invention has some significant advantages. The main advantage lies in the fact that the multifunction machine tool according to the present invention makes it possible to obtain complex machining processes, including gear cutting and screw thread cutting by means of milling, by means of the combination of a number of units which can machine the workpiece, in a manner coordinated with one another, with a single hold, therefore without requiring any relocation of the workpiece. The structure of the machine makes it possible to obtain, in a simple manner and with relatively contained costs, great flexibility in the machining of the workpiece, according to specific production requirements.

The multifunction machine according to the present invention therefore permits great economy also in complex machining of workpieces, inasmuch as, owing to the integration of the machining processes, there is no need to move the workpieces onto other machines.

Finally, the machine according to the present invention enables working performances to be obtained which are comparable with or superior to those which would be obtained by the use of two separate machines.

A further advantage is provided by the fact that the machine uses simple work units and workpiece holding systems, not therefore requiring the production of specific units for carrying out the machining processes in an integrated manner. For the same reasons, the machine according to the present invention can be easily adapted for an almost complete range of machining processes, being able to be produced in a modular fashion and therefore fulfilling all possible requirements in the sector.

Other advantages, features and the mode of use of the present invention will become clear from the following detailed description of some forms of embodiment, provided by way of non-limiting example. Reference will be made to the figures of the appended drawings, in which:
Figure 1 is a schematic illustration of a machine tool according to an exemplary embodiment of the present invention;
Figures 2A, 2B are two schematic illustrations which illustrate a first work unit and the respective directions of movement, according to two different forms of embodiment;
Figure 3 is a schematic illustration which illustrates a gear cutting unit and the respective directions of movement, a detail of the machine of Figure 1;
Figures 4A and 4B are two schematic illustrations which illustrate a grinding wheel centre and the relative directions of movement, according to two different forms of embodiment;
Figures 5A and 5B are two schematic illustrations which illustrate a universal gear cutting unit and the relative directions of movement, according to two different forms of embodiment;
Figure 6 is a schematic illustration which illustrates a unit with an orbital rotation gear cutting headstock and the respective directions of movement;
Figure 7 is a schematic illustration which illustrates a unit for heat treatment and the respective directions of movement;
Figures 8A, 8B and 8C are respectively a schematic illustration in a plan view of a support rest and two schematic illustrations, in a side view, of two respective forms of embodiment of the support rest;

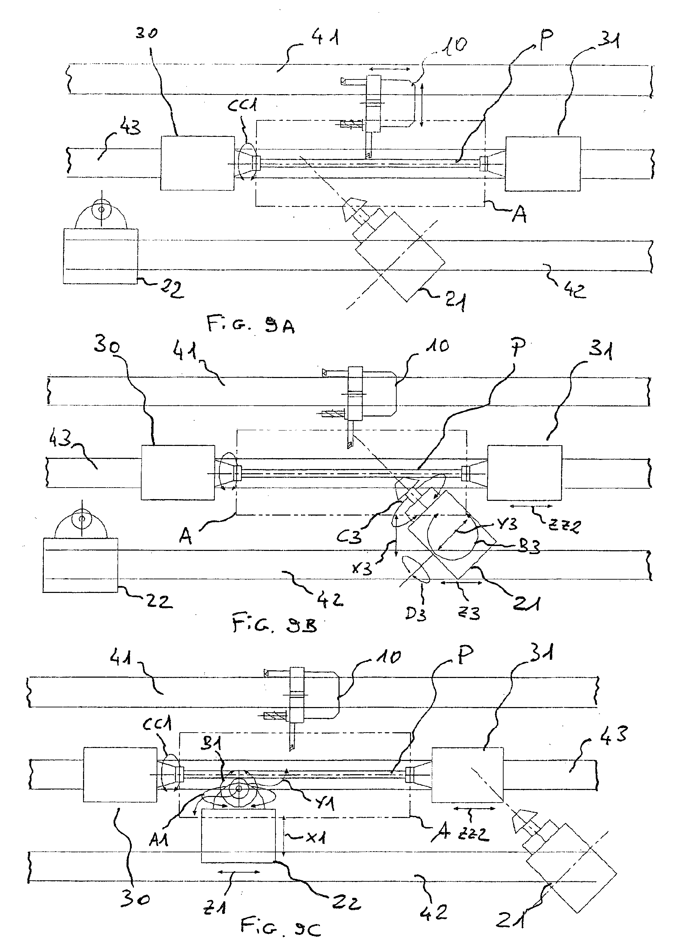

Figures 9A and 9C are schematic illustrations which illustrate the functioning of the machine tool according to the present invention; and
Figure 10 is a schematic view which illustrates a screw milling and spur and bevel gear cutting unit of a second form of embodiment of the present invention.

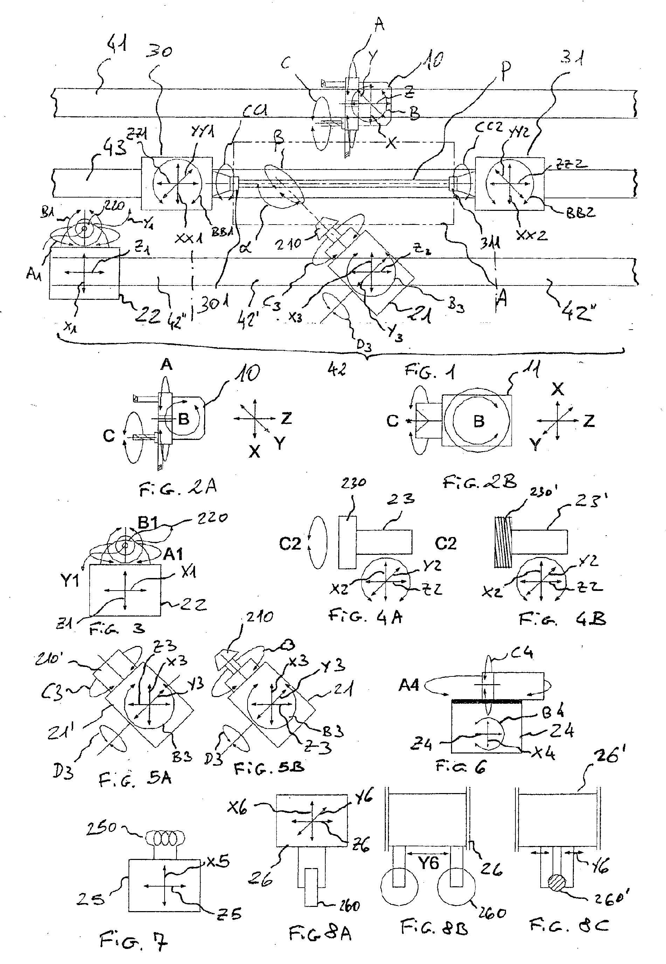

With initial reference to Figure 1, a machine tool according to the present invention comprises a machine bed, not illustrated in the drawing, which has a headstock guide 43, on which is placed, preferably so as to slide, a main headstock 30 which, by means of suitable holding means 301, makes it possible to mount a workpiece to be machined P. The headstock guide 43 is produced for example by means of a pair of profiled guide members, not illustrated in the drawing, and which permit the sliding of a carriage.

The main headstock 30 permits at least the rotation CC1 of the workpiece P, about an axis ZZ1, substantially parallel to the length of the workpiece P itself. The holding means 301 for the workpiece, illustrated schematically in Figure 1, may be both of the type adapted to machining directly from bar, and with a collet or jaw chuck type system for producing an external or internal hold of workpieces which are already cut.

Consequently, the workpiece P may be formed both from bar and from individual workpieces which are already cut.

As will be seen hereinafter, the main headstock 30 may execute further movements along other axes, in addition to the aforesaid CC1 rotation, and which will be illustrated hereinafter.

Preferably, the machine tool according to the present invention further comprises a tailstock 31, also mounted on the guide 43, and capable of executing CC2 rotations about an axis ZZ2 substantially parallel to the aforesaid CC1 axis and provided with holding means 311. As will be seen in more detail hereinafter, the tailstock 31 may also be withdrawn, in such a way as to release the workpiece P and permit machining in the region of the end of the workpiece P previously engaged in the tailstock 31. For this purpose, the tailstock 31 may be slidable on the guide 43, in such a way as to withdraw and be able to move away from the workpiece P.

With reference to Figure 1, it will be noted that the present invention proves particularly advantageous in the case where two work unit guides 41 and 42 are used.

The work unit guides 41 and 42 are also fixed to the machine bed and are arranged parallel to each other, and parallel to the headstock guide 43. The three guides 41, 42 and 43 may be positioned on a single plane or on a number of planes, also at angles to one another, in order to facilitate the construction of the machine bed itself. A first guide 41 of the work unit guides supports a work unit 10 capable of carrying out at least turning operations, and at least two different work units are placed in a second guide 42, in particular a screw milling and bevel gear cutting unit 21 and a further spur gear cutting unit 22.

In particular, in the embodiment described in Figure 1, the machine tool according to the present invention comprises at least two work units, which are intended to carry out different machining processes on the mechanical workpiece, respectively toothing and milling of screws and gear cutting, and are supported by two carriages sliding on the second work unit guide 42. The work unit guides may also have the features of the headstock guide 43, therefore comprising a pair of profiled guide members on which a carriage can slide.

As will become clear hereinafter, the combination of work units which is described here represents exclusively an example of embodiment of a machine which is capable of carrying out turning, screw milling and both spur and bevel gear cutting in a single hold, a very pressing requirement in the field of mechanical machining processes.

However, besides the unit described above, among the various combinations which the present invention makes it possible to obtain, it should be noted that two units, the same or similar, may also be mounted on the same guide or on opposed guides. For example, two turning units 10 or 11 may be used, (like for example a conventional 4-axis lathe).

In particular cases, there could also be two work units of another type which are the same, for example toothing units. In addition, the units 10 and 11 are capable of supporting another centre, not illustrated in the drawings, for supporting the workpiece being machined, in particular during the milling of a screw, benefitting the overall dimensions. Such an operation would not be possible with a conventional frontal centre carriage, and with difficulty even using the centre withdrawable from the hole of the tailstock, as illustrated previously.

A description will now therefore be given of the aforesaid form of embodiment, capable essentially of turning, toothing bevel and spur gears and milling screws, it being clear that the same inventive concept may also be applied to numerous other machining processes, some of which will however be explicitly described hereinafter.

With reference to Figure 1, the first work guide 41 supports the unit 10 for the machining processes of turning and/or milling and/or boring, represented by a rotating toolholder turret with a number of positions. It should be noted that the turret 10 is similar to the one which is the same as that used in modern CNC lathes and, consequently, will not be described in more detail. However, the use of a standard element allows the machine to be produced in a simple manner, without the need for suitable designing of the component.

Preferably, the turret 10 can carry out movements according to an axis X, perpendicular to the axis of rotation of the workpiece P, an axis Z parallel to the axis of rotation of the workpiece P, and an axis Y, perpendicular to the preceding axes. In addition, it can carry out a rotation B, about the horizontal axis, and a rotation C, which consists in the rotational motor drive of the tools. It will therefore be noted that the movement along the axis X includes carrying out movements of approach to/removal from the workpiece P.

As an alternative to the turret, the unit 10 for machining processes of turning and/or milling and/or boring may be provided by means of a headstock rotating at a station with tool change and integrated multi-tool magazine. It is clear that in this case there will be a rotation C of the tool which however will be taken singly from a magazine, with the advantage of being able to provide for the presence of any number of different tools. In any case, as described previously, the units 10 and 11 may both alternate with each other and be used combined with each other, for example being disposed on a single guide and on separate guides. This may prove advantageous inasmuch as the tool magazine of the unit 11 may also have a capacity of hundreds of tools.

On the second work guide 42 there are instead arranged, by means of two separate carriages sliding on the same guide, the screw milling and bevel gear cutting unit 21 and the spur gear cutting unit 22.

The two units 21 and 22 can slide independently on the guide 42 in such a way that they can be disposed, alternately and independently of each other, inside or outside a workspace A. The workspace A is defined in a general manner as a zone inside which the work units can operate on the workpiece P. Obviously, the workspace will vary according to the type of machining process to be carried out, and if necessary to the portion of the workpiece P involved in the machining process. In other words, it is clear that when a localized machining process has to be carried out, for example toothing in a portion of the workpiece P, the workspace A will be located around that portion, while in the case where screw thread cutting is to be carried out on the entire length of the workpiece P, the workspace A extends substantially for the entire workpiece P.

The machine according to the present invention can therefore work with a number of work units, having different features from one another, bringing them into or out of the workspace A. In Figure 1, the workspace A coincides with the entire length of the workpiece, in such a way as to ensure complete machining on the workpiece at each work unit. However, as emphasized above, more localized workspaces A may also be defined.

In order to be able to bring a work unit inside or outside the workspace, each unit is therefore movable independently on the guide 42 and the guide 42 has a length, unlike the known machines, such as to extend beyond the positions occupied by the headstock 30 and tailstock 31, in such a way as to be able to move the work units away from the workspace A.

In other words, the guide 42 will have a work section 42', in which each work unit 21 and 22 can perform a respective machining process on the workpiece P, and two parking sections 42", in which the work units can be placed in such a way as to allow a further unit access to the work section.

As will easily be understood, the exemplary embodiment describes the case in which the guide 42 supports two work units; however, any number of work units may be provided, providing parking sections 42" which are long enough to accommodate more than one work unit.

In order to be able to carry out the machining processes required, the movement of the work units will be coordinated at least with the rotation of the workpiece P, but preferably the movement of each work unit will also be coordinated with the movement of the further units, in such as way as to be able to carry out synchronized and/or simultaneous machining processes on the workpiece P.

In particular, in the present exemplary embodiment, the gear cutting unit 22 will be able to carry out movements according to an axis X1, perpendicular to the axis of rotation of the workpiece P, an axis Z1 parallel to the axis of rotation of the workpiece P, and an axis Y1, perpendicular to the preceding axes. In addition, it will be able to execute a rotation B1, about the axis Y1, which effects the rotation of the tool, and a rotation A1, which permits the rotation of a tool rest. It will be noted therefore that the movement along the axis X1 includes carrying out movements of approach to/removal from the workpiece P, while the movement along the axis Z1, besides being used during the machining of the workpiece P, makes it possible to bring the work unit inside or outside the workspace A. In particular, in Figure 1, the unit 22 is placed outside the workspace A, in the parking portion 42" of the guide 42. The gear cutting unit 22 therefore comprises a milling and hobbing spindle, with the possibility of mounting at the same time a milling cutter for screw threads and hobs, or a grinding wheel for disk or screw grinding.

The rotation B1 of the tool takes place in synchronism with the axes CC1, CC2 of the main headstock and the tailstock, in such a way as to be able to carry out milling and/or grinding with tools with continuous screw generation, obtaining gears of various types. The rotation B1 may also be synchronized with the axis C of the toolholder turret 10, so as to be able to tooth and at the same time chamfer the teeth of the same workpiece by means of two machining processes simultaneously with 2 different units synchronized with each other.

The screw milling unit 21, still according to a preferred form of embodiment, is instead movable according to an axis X3, perpendicular to the axis of rotation of the workpiece P, an axis Z3 parallel to the axis of rotation of the workpiece P, and an axis Y3, perpendicular to the preceding axes. In addition, it can also execute a rotation C3, and effects the rotation of a gear cutting tool 210 and two further rotations C3 and D3, which make it possible to incline the gear cutting tool by the angles and ß, with respect to the axis ZZ1 of rotation of the workpiece P. It should therefore be noted that the movement along the axis X3 includes executing movements of approach to/removal from the workpiece P, while the movement along the axis Z3, besides being used during the machining of the workpiece P, makes it possible to bring the work unit inside or outside the workspace A. In particular, in Figure 1, the unit 21 is placed inside the workspace A, in the work portion 42' of the guide 42.

The possibility of varying the angles of inclination and ß between the axis ZZ1 of the tool 210 and the main axis of the workpiece to be machined P, according to the type of machining carried out and/or during the machining itself, makes it possible to carry out, unlike the machines produced according to the prior art, any type of machining process on the workpiece P, including the machining of endless screws, bevel gear cutting with cone hobs, and other types of complex gear cutting. For example, it is possible to carry out toothing of bevel gears, with straight or helical teeth, according to the "Gleason", "Klingeinberg-Palloid" systems or the like. In general, therefore, the gear cutting unit 21 makes it possible to produce bevel gears with straight or helical teeth and, practically, based on the tool and the software used for control, it can carry out different bevel gear cutting, of all known types. Theoretically, the same unit 21, cantilever mounting a hob, can make spur gears, but clearly, with outputs not normally inferior to the specific unit for spur gear cutting 22.

It will also be noted that the machine tool according to the present invention, being able to use work units with features similar to those of the individual machines dedicated to a single type of machining process, can be easily controlled and, consequently, a person skilled in the art will be capable of carrying out the programming in order to obtain the desired machining process.

As previously indicated, the movements of the components of the machine tool according to the present invention can be coordinated with one another, in such a way as to obtain synchronization of the movements for the purpose of carrying out the different machining processes, according to a predetermined sequence.

In order to control the axes of movement previously illustrated with reference to headstock and tailstock and to the individual work units, the machine tool also comprises a control, preferably of the CNC type, which manages the axes in such a way as to carry out the operations required and to obtain the desired machining sequence.

Controls capable of managing and coordinating the various axes of the machine are known in the sector and, for example, the numerical control Sinumerik 840D marketed by Siemens AG, permits, in its standard version, the control of 31 axes, therefore sufficient for implementing the functions described previously. In any case, integrated modular units are however provided which make it possible to increase the number of axes controlled. Therefore, even in the case where the machine provides a greater number of work units, compared with the three described previously, it will easily be possible to control their movements.

The operating principal illustrated above therefore easily applies also to other work units which can be used in combination with or as an alternative to those described hitherto. In particular, this feature makes it possible to produce a modular machine, easily adaptable to the different machining requirements.

In addition, the use of a single control allows the same control software to be applied to the different machine versions which are produced. For example, the machine may have a single software version capable of managing all the various machining processes which can be carried out. Therefore, according to the work unit modules which are present, specific functions may be enabled or otherwise.

In general, the machine tool according to the present invention may be used for machining processes of turning, screw milling and milling on various units, spur and bevel gear cutting in the various existing types, cylindrical and profile grinding, grinding of gears and screws, whirling, and heat treatment. This list should not be regarded as exhaustive inasmuch as, by applying the inventive concept of the present invention other possible machining processes may be obtained.

In any case, with reference to Figures 2A to 8C, a description will now be given of some features relating to the main units which can be used in the machine, associated in groups of two or more units on the same guide.

As already emphasized previously, the main headstock 30 may have a number of movements, besides the rotatory movement CC1 in both directions for the rotation of the bar and/or of the workpiece. A second movement may in fact be in the direction of the axis of the headstock itself, ZZ1, rendering it unconstrainedly movable, a third along an orthogonal axis XX1 on a horizontal plane in order to displace it according to the horizontal plane, and a fourth displacement along the vertical axis YY1 to bring the axes into a different vertical position. These movements may be individual or combined with one another from 1 to 4 axes. In this case also, the control of the machine tool will be able to ensure perfect synchronism in the movements; however, it is clear that in theory such movements could be effected with a transmission with gears or belts.

With regard to the tailstock 31, it may have the same movements as the main headstock 30 according to the respective axes XX2, ZZ2, YY2, and CC2. Moreover, it could be possible to provide for a fifth axis BB2, for circular rotation with reference to the vertical axis Y.

As emphasized previously, the tailstock 31 advantageously has the movement along the axis ZZ2 which permits it to withdraw from the workpiece in that direction.

In addition, it may have a retractable centre, not illustrated in the drawing, which is integral with the axis of rotation and which may be moved in such a way as to allow it to withdraw according to the axis Z, leaving the holding system of the tailstock itself. In this way, the holding system of the tailstock can grip the tailstock instead of the workpiece itself, in such a way as to use it on the workpiece being machined. Therefore, by causing the centre to move back, it is possible to disengage the holding system, which may be used to close itself on the workpiece being machined. This possibility again permits maximum flexibility for the different machining processes which the machine according to the present invention makes it possible to obtain.

With regard to the work units of the machine, a summary will now be given of some of the features relating to the work units already described with reference to the preferred form of embodiment of the machine according to the present invention, as will also be indicated some optional features which they may possess.

Firstly, the unit 10 for machining processes of turning and/or milling and/or boring carried out by the headstock unit or/and by the toolholder turret which can be carried out in a substantially similar manner to that of the modern CNC lathes, therefore with standardized features, and for this reason will not be described in further detail.

Therefore, the screw milling and bevel gear cutting unit 21 will be able to machine workpieces held both on the main headstock and on the tailstock, carrying out machining processes synchronized with the C rotations of the units present on the machine, or also the rotation B of the gear cutting and milling unit, in such a way as to be able to work simultaneously. There may also be present a further unit similar to that for bevel gear cutting, not illustrated in the drawing, with the same axes of movement, and which, instead of mounting chip-forming tools, may mount a specially shaped grinding wheel for grinding bevel gears.

The gear cutting and screw milling unit 22, in addition to what has already been indicated, may mount a spindle with a number of tools, which is movable according to its own axis B1, for example a milling hob for pre-grinding or preskiving, then a hob for skiving or a screw grinding wheel for grinding, in such a way as to obtain both machining processes with a single unit, without either tool changes or transfers to further units.

As an alternative or in association with the aforesaid unit, there may be a grinding unit 23 and 23', illustrated in Figures 4a and 4B, according to two alternative forms of embodiment. Such units make it possible to grind on a cylindrical shape or on workpieces of another shape (with a profiled disk shape grinding wheel), and/or make it possible to mount a screw type and/or fluted grinding wheel for grinding profiles such as gears, splines and free profiles produced by means of synchronism with the axes of the main headstock and tailstock. In addition, it is possible, by using continuous thread screw grinders, to grind involute profiles of the gear type. The unit may also be interlocked with a suitable lapping device, for reprofiling of the grinding wheel in series.

In this case also, the unit is mounted on one of the work unit guides 41, 42, with the possibility of movement along an axis Z2, parallel to the guide, in such a way as to be disposed alternately inside and outside the workspace A. Besides the axis Z2, there may also be displacements along the axes X2 and Y2, the first of which enables movements of approach to/removal from the workpiece to be machined, and the second perpendicular to the other two. Preferably, besides the C2 rotation of the grinding wheel, a rotation B2 about the axis Y will also be provided.

This unit may also be interfaced with the control in such a way that the rotation C2 is synchronizable with the rotation CC1 of the main headstock and the rotation B1 of the gear cutting unit 22. This makes it possible to carry out at the same time both the gear cutting operation and the grinding operation simultaneously on the workpiece P.

Therefore, the presence of the grinding unit 23 or 23' makes it possible to provide the machine tool according to the present invention with grinding capacities which substantially correspond to those of a modern CNC grinding machine.

As another alternative, and as may be noted in Figure 6, the machine may have an orbital rotation unit 24 for carrying out swirling processes for screw generating processes, or profiles on the axes in coordinated rotation with the rotations CC1 and CC2 of headstock and tailstock, and the movements X4, Z4, C4, A4, Y4 in an optional manner. Clearly, the unit 24 may also be installed on one of the guides 41 and 42, together with the others on the axis Z of the other units, either upper or lower.

As another alternative or in addition, a special unit 25 may be provided which will still be mounted on one of the guides 41 or 42, and which may for example support an inductor 250 for the heat treatment of induction hardening. This will enable the heat treatment to be carried out on the workpiece being machined, in such a way as to thermally treat with this unit the workpiece rough-machined by the other units, in order then to finish it by means of grinding or skiving with another unit, still during a single machining cycle. In this case, the axes of movement required are the axes Z5, X5 and in applications a rotation B5 (rotation about the vertical axis) and Y5, (vertical movement), in order to be able to follow any position of the workpiece. Finally, particularly useful may be the presence of a support unit 26, or a unit which comprises a rest 260, of suitable shape based on the type of machining process. In particular, there may be a rotating rest 260, both rigid and with revolving bearings, or a sliding rest 260'. The support unit is mounted on a carriage which has at least the possibility of movement along the axes X6 and Z6, and optionally an axis Y6, for inserting itself vertically.

By means of the support unit, the workpiece being machined can be supported in such a way as to minimize the flexion of the workpiece P, in particular in the case of long workpieces or of cantilevered machining processes.

This unit therefore proves particularly advantageous when associated with the gear cutting unit 21 and/or 22 inasmuch as, being coordinated therewith, it can ensure maximum flexibility of the machine tool.

For example, it may be maintained outside the workspace A during the machining of small workpieces or in the case of machining processes which do not require further support and, in case of need, brought onto the workspace A in such a way as to cooperate with the other units.

Finally, the machine may comprise a "Fellow" gear cutting unit 27 which will be able to execute movements along the axes X7 and Z7, respectively perpendicular and parallel to the guide 42. The unit further comprises a gear cutting headstock which is allowed the B rotation within the plane defined by the axes X7 and Z7 and which supports a gear cutting tool. In this case, the tool may execute a movement along the axis ZZ7 in a longitudinal direction, and rotate according to a rotation C7 synchronous with the rotation CC1 of the headstock, and a rotation CC7, synchronous with the travel of the tool along the axis ZZ7. In this way, a helical guide is produced, required for such types of machining process. The guide may be produced by means of a mechanical or electronic system, by means of embodiments similar to the machines dedicated to "Fellow" gear cutting, the features of which are therefore known to a person skilled in the art.

There may also be provided, for the purpose of increasing the flexibility of the applications for such units, a movement along the axis Y, in such a way as to raise and lower the entire machining headstock.

With this unit it is possible to do all the blind gear cutting, internal and external, couplings, also beveled, orthogonal or inclined frontal gear cutting (thanks to the axis B, headstock rotation). It is to be considered that the headstock has a space for the tool, of mechanical standard, but could be electronic, by using a linear motor it is possible to use either X or Z or in combination, depending on the direction of the work axis of the tool, to provided in any case movements also independent of the axes X and Z.

As already emphasized, all the units with axes C and B are synchronizable with one another, for machining processes also simultaneous, or in any case with the same polar axis. In addition to such units, a countersinking unit may be provided and there may be a portal integrated with a suitable loading/unloading unit, for substitution of the machined workpieces.

It should be noted that the units previously described may be combined in any manner and in any number on the machine tool according to the present invention, installing two or more units on the same guide. This feature makes it possible to provide the modularity in the machine, which may be produced according to the machining processes required. In particular, it should be understood that the same inventive concept may be produced by mounting all the units on the single guide 42. In particular, according to a preferred form of embodiment, the modular units will be installed on the guide 42, while the main turning and/or milling and/or boring unit will be mounted on the further guide 41.

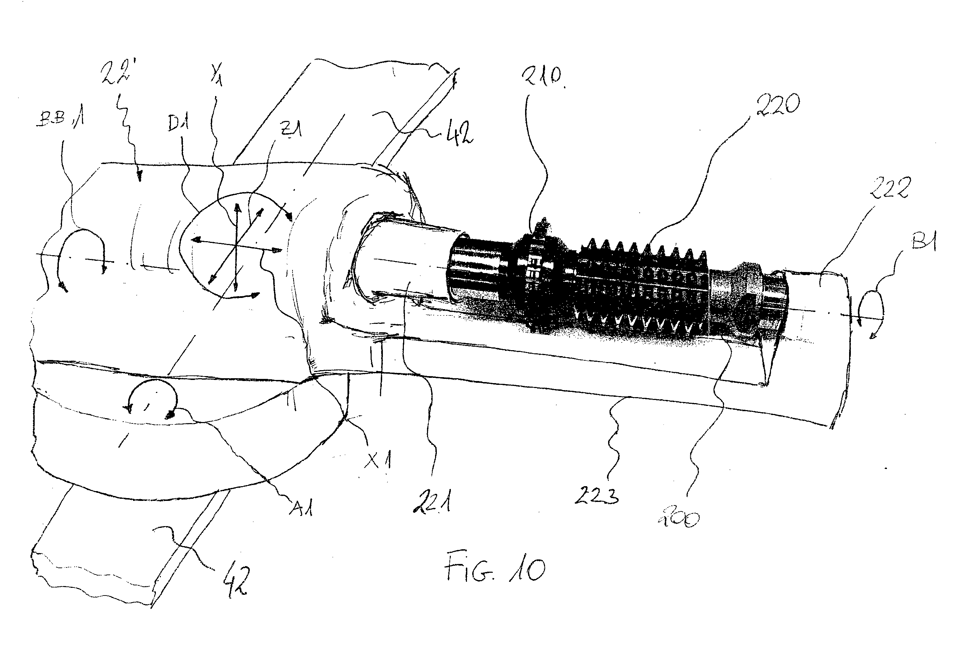

With reference therefore to Figure 10, a detailed illustration is given of a further form of embodiment of the machine according to the present invention, in which the milling tool 210 and the spur gear cutting tool 220 are mounted on the same unit 22'. In particular, such machining processes can be carried out by means of a single tool 200, which comprises a milling cutter 210 and a hob 220 which are rotatable about the same axis. The milling cutter 210 has a larger diameter than the hob 220, so that the latter does not interfere with the workspace A during the screw milling or bevel gear cutting machining processes. The configuration of such a unit therefore makes it possible to use the two tools 210 and 220 independently and alternately with each other, by means of rotational and/or translational movements which make it possible to bring the tools alternately inside the workspace A.

In the specific instance, the unit 22' has an elongate support 222 which enables one end of the whole tool 200 to be supported while the other end is connected to the headstock 221. The components are therefore mounted on the guide 42 by means of a base 223 which, in particular, makes it possible to carry out the rotational and translational movements described previously. This solution has the advantage of permitting the robustness of the hobbing unit and, at the same time, of also carrying out the machining of bevel gears and of screws.

It should also be noted that with respect to the configuration illustrated previously, the unit will also be able to execute a rotational movement C1 about a further axis in order to allow the two tools 210 and 220 to work independently on the workpiece and, in particular, also to carry out frontal machining processes.

In general, the combination of a number of units therefore permits maximum flexibility of machining processes on the same workpiece, according to production requirements. Owing to the use of a single hold for all the machining processes, it is possible to reduce significantly the time for the cycle of machining processes which would otherwise require several machines and/or items of equipment. This feature additionally permits the integration of the machining processes, there being no need to move onto other machines. In this way there will also be a reduction in the overall installation costs, inasmuch as the cost of a single multifunction machine will be less than the total cost of the individual machines and the corresponding equipment.

It should also be borne in mind that many machining processes are faster than the loading/unloading time on machines for a single machining process.

On the other hand, greater precision of the machining processes is ensured, owing to the holding system, on the basis that the workpieces are completely machined by the various units without ever being removed, ensuring practically perfect concentricity.

A further advantage is provided by the fact that the machine moves with simple workpiece holding systems, while the single machining process machines must each individually have holding systems for re-machining, which are often expensive and specific to each detail.

In addition, the CNC control controls all the units in a synchronized manner, permitting completely automatic management of the machining processes. It is additionally possible, with post-process units if necessary, to measure the workpieces and correct the measurements during machining, in such a way as to operate the machine autonomously, without being manned and with continuous working, rendering the machining very economical. A tool-axis stress monitoring system may also be provided, which allows stoppage in the case of wear or anomalies during the process.

The present invention has up to now been described with reference to preferred forms of embodiment. It is to be understood that other forms of embodiment may exist which take up the same inventive nucleus, all coming within the scope of protection of the claims disclosed hereinafter.

## Claims

1. A multifunction modular machine tool for integrated machining processes, comprising a main headstock (30) suitable for holding a workpiece to be machined (P), in such a way as to dispose it inside a workspace (A) and to carry out a rotation (CC1) of the workpiece (P) about a main axis (ZZ1) during different machining operations, a first work guide (41) which supports a turning or multi-tool unit (10) and at least one further work guide (42), said work guides (41, 42) extending in a direction substantially parallel to said main axis (ZZ1), **characterized in that** it comprises a tool for machining processes of screw milling and/or bevel gear cutting (210) and a tool for machining processes of spur gear cutting (220) which are associated with at least one further work unit (21, 22, 22') movable on said further work guide (42), said tool for machining processes of screw milling and/or bevel gear cutting (210) and said tool for machining processes of spur gear cutting (220) being movable on said further work guide (42) by means of translational movements, in such a way as to be able to be disposed, alternately and independently of one another, inside said workspace (A), in order to operate on the workpiece to be machined (P), or outside said workspace (A).

2. A machine tool according to claim 1, wherein said tool for machining processes of screw milling and/or bevel gear cutting (210) and said tool for machining processes of spur gear cutting (220) are mounted on a single milling and gear cutting unit (22').

3. A machine tool according to claim 2, wherein said tool for machining processes of screw milling and/or bevel gear cutting (210) and said tool for machining processes of spur gear cutting (220) are rotatable on the same axis of rotation (B1).

4. A machine tool according to claim 2 or 3, wherein said tool for machining processes of screw milling and/or bevel gear cutting (210) has a larger diameter than said tool for machining processes of spur gear cutting (220).

5. A machine tool according to any one of claims 2 to 4, wherein said milling and gear cutting unit (22') comprises a base (223) movable on said guide (42) which supports a work headstock (221) which comprises an elongate support (222) for supporting one end of said tool for machining processes of screw milling and/or bevel gear cutting (210) or of said tool for machining processes of spur gear cutting (220).

6. A machine tool according to any one of claims 2 to 5, wherein said tool for machining processes of screw milling and/or bevel gear cutting (210) and said tool for machining processes of spur gear cutting (220) are produced as a single body respectively in the form of a milling cutter and a hob on an elongate tool (200).

7. A machine tool according to claim 1, wherein said tool for machining processes of screw milling and/or bevel gear cutting (210) and said tool for machining processes of spur gear cutting (220) are supported on two respective work units (21,22), the movement of said two work units (21, 22) being coordinated at least with the rotation (CC1) of the workpiece (P), said at least two work units (21, 22) being able to slide independently on said work unit guide (42) in such a way that they can be disposed, alternately and independently of one another, inside said workspace (A), in such a way as to operate on the workpiece to be machined (P), or outside said workspace (A).

8. A machine tool according to any one of the preceding claims, wherein said main headstock (30) is disposed on a headstock guide (43) and is associated with a tailstock (31), said tailstock (31) being able to slide on said headstock guide (43) in such a way as to be able alternately to effect the holding of the workpiece (P) by means of holding means (310) and to release an end of the workpiece (P) in order to carry out machining processes in the region of said end.

9. A machine tool according to any one of the preceding claims, wherein said guides (41, 42, 43) are parallel to one another.

10. A machine tool according to claim 8 or 9, comprises a digital control suitable for coordinating the movement of said two work units (21, 22) with the rotation (CC1) of the workpiece (P) in such a way as to carry out a predetermined sequence of machining processes in a single hold of the workpiece (P) on the main headstock (31).

11. A machine tool according to any one of claims 8 to 10, wherein at least one (22) of said work units (21, 22) has a main work axis (C3) of a corresponding tool (220) orientable in such a way as to define angles of inclination ( , ß) with respect to the axis of rotation (ZZ1) of the workpiece to be machined (P) which are variable according to the type of machining process carried out and/or during the machining itself.

12. A machine tool according to any one of claims 8 to 11, wherein said work guide (42) comprises a parking section (42") inside which one work unit is placed when the other work unit is machining the workpiece (P).

13. A machine tool according to any one of the preceding claims, further comprising a support unit (26; 26') with a rest (260; 260') mounted on said at least one work guide (42) and suitable for being disposed alternately inside the workspace (A) to provide support for the workpiece (P) while it is being machined or outside the workspace (A).

14. A machine tool according to any one of the preceding claims, comprising two or more units among which: a unit for machining processes of turning and/or milling and/or boring (10;11), a spur and bevel gear cutting unit (21), a gear cutting and screw milling unit (22), a grinding unit (23; 23'), an orbital rotation unit (24), a special unit (25) for heat treatment, a support unit (26; 26') with rest (260; 260') which are mounted so as to slide one the same work guide (42) and are movable along said guide (42) independently of one another.

## Patentansprüche

1. Multifunktionale modulare Werkzeugmaschine für eine integrierte Bearbeitung, umfassend:
Einen Hauptspindelstock (30), der zum Halten eines zu bearbeitenden Werkstücks (p) in der Weise geeignet ist, um ihn innerhalb eines Arbeitsbereichs (A) anzuordnen und um eine Drehung (CC1) des Werkstücks (P) um eine Hauptachse (ZZ1) herum während unterschiedlicher Bearbeitungstätigkeiten auszuführen, eine erste Arbeitsführung (41), die eine drehende oder Mehrfach-Werkzeugeinheit (10) und zumindest eine weitere Werkzeugführung (42) abstützt, wobei sich die Werkzeugführungen (41, 42) in eine Richtung erstrecken, die im Wesentlichen parallel und auf einer entgegengesetzten Seite der Hauptachse (ZZ1) ist,
**dadurch gekennzeichnet, dass** sie ein Werkzeug zur Schraubenfräsenbearbeitung und/oder Kegelradschneidbearbeitung (210) und ein Werkzeug zur Stirnradschneidbearbeitung (220) aufweist, die mit zumindest einer weiteren Werkzeugeinheit (21, 22, 22') verbunden sind, die auf einer weiteren Werkzeugführung (42) beweglich ist,
wobei das Werkzeug für Schraubenfräsen-Bearbeitungen und/oder Kegelradschneiden-Bearbeitungen (210) und das Werkzeug für Stirnradschneiden-Bearbeitungen (220) auf der weiteren Arbeitsführung (42) durch translatorische Bewegungen in der Weise beweglich sind, um abwechselnd und unabhängig von einander innerhalb des Arbeitsbereichs (A) angeordnet werden zu können, um auf dem zu bearbeitenden Werkstück (P) oder außerhalb des Arbeitsbereichs (A) betätigt zu werden.

2. Werkzeugmaschine gemäß Anspruch 1, wobei das Werkzeug zur Bearbeitung beim Schraubenfräsen und/oder Kegelradschneiden (210) und das Werkzeug zur Bearbeitung beim Stirnradschneiden (220) auf eine einzelnen Fräs- und Zahnradschneideeinheit (22') befestigt sind.

3. Werkzeugmaschine gemäß Anspruch 2, wobei das Werkzeug zur Bearbeitung beim Schraubenfräsen und/oder Kegelradschneiden (210) und das Werkzeug zur Bearbeitung beim Stirnradschneiden (220) auf derselben Drehachse (P1) drehbar sind.

4. Werkzeugmaschine gemäß Anspruch 2 oder 3, wobei das Werkzeug zur Bearbeitung beim Schraubenfräsen und/oder Kegelradschneiden (210) einen größeren Durchmesser als das Werkzeug zur Bearbeitung beim Stirnradschneiden (220) aufweist.

5. Werkzeugmaschine gemäß einem der Ansprüche 2 bis 4, wobei die Fräs- und Zahnradschneideinheit (22') eine Basis (223) aufweist, die auf der Führung (42) beweglich ist, die einen Arbeitsspindelstock (221) abstützt, der eine verlängerte Abstützung (222) zum Abstützen eines Endes des Werkzeugs zur Bearbeitung beim Schraubenfräsen und/oder Kegelradschneiden (210) oder des Werkzeugs zur Bearbeitung beim Stirnradschneiden (220) aufweist.

6. Werkzeugmaschine gemäß einem der Ansprüche der Ansprüche 2 bis 5, wobei das Werkzeug zur Bearbeitung beim Schraubenfräsen und/oder Kegelradschneiden (210) und das Werkzeug zur Bearbeitung beim Stirnradschneiden (220) jeweils als einzelner Körper in der Form eines Fräswerkzeuges und eines Wälzfräsers auf einem verlängerten Werkzeug (200) hergestellt werden.

7. Werkzeugmaschine gemäß Anspruch 1, wobei des Werkzeug zur Bearbeitung beim Schraubenfräsen und/oder Kegelradschneiden (210) und das Werkzeug zur Bearbeitung beim Stirnradschneiden (220) auf zwei entsprechenden Arbeitseinheiten (21, 22) abgestützt sind, wobei die Bewegung der beiden Arbeitseinheiten (21, 22) zumindest mit der Drehung (CC1) des Werkstückes (P) koordiniert wird, wobei zumindest zwei Arbeitseinheiten (21, 22) unabhängig auf der Arbeitseinheitführung (42) derart gleiten können, dass sie abwechseln und unabhängig von einander innerhalb des Arbeitsbereichs (A) in der Weise angeordnet werden können, um auf dem zu bearbeitenden Werkstück (5) oder außerhalb des Arbeitsbereichs (A) betätigt zu werden.

8. Werkzeugmaschine gemäß eine der vorhergehenden Ansprüche, wobei der Hauptspindelstock (30) auf einer Spindelstockführung (43) angeordnet und mit einem Reitstock (31) verbunden ist, wobei der Reitstock (31) auf der Spindelstockführung (43) derart gleiten kann, um abwechseln das Halten des Werkstücks (P) mittels einer Haltevorrichtung (310) zu bewirken und um ein Ende des Werkstücks (P) freizugeben, um die Bearbeitungen im Bereich des Endes auszuführen.

9. Werkzeugmaschine gemäß einem der vorhergehenden Ansprüche, wobei die Führungen (41, 42, 43) parallel zueinander sind.

10. Werkzeugmaschine gemäß Anspruch 8 oder 9, die eine Digitalsteuerung aufweist, die zum Koordinieren der Bewegung der beiden Arbeitseinheiten (21, 22) mit der Drehung (CC1) des Werkstücks (P) in der Weise geeignet ist, um eine vorbestimmte Sequenz der Bearbeitungen bei einem einzelnen Halten des Werkstücks (P) auf dem Hauptspindelstock (31) aufzuführen.

11. Werkzeugmaschine gemäß einem der Ansprüche 8 bis 10, wobei zumindest eine (22) der Arbeitseinheiten (21, 22) eine Hauptarbeitsachse (C3) eines entsprechenden Werkzeugs (220) aufweist, die derart ausrichtbar ist, um Neigungswinkel ß bezüglich der Drehachse (ZZ1) des zu bearbeitenden Werkstücks (P) zu definieren, die gemäß dem Typ der Bearbeitung, die ausgeführt wird und/oder während der Bearbeitung selbst variabel sind.

12. Werkzeugmaschine gemäß einem der Ansprüche 8 bis 11, wobei die Arbeitsführung (42) einen Parkbereich (42") aufweist, innerhalb dem ein Arbeitseinheit angeordnet ist, wenn die andere Arbeitseinheit das Werkstück (P) bearbeitet.

13. Werkzeugmaschine gemäß einem der vorhergehenden Ansprüche, die ferner eine Abstützeinheit (26; 26') mit einer Stütze (260; 260') aufweist, die auf zumindest einer Arbeitsführung (42) befestigt ist und geeignet ist, um abwechselnd innerhalb des Arbeitsbereichs (A) angeordnet zu werden, um die Abstützung für das Werkstück (P) vorzusehen, während es bearbeitet wird, oder außerhalb des Arbeitsbereichs (A) angeordnet zu werden.

14. Werkzeugmaschine gemäß einem der vorhergehenden Ansprüche, die zwei oder mehr Einheiten aufweist, welche sind:
Eine Einheit für Bearbeitungen beim Drehen und/oder Fräsen und/oder Bohren (10; 11),
Eine Stirnrad-und Kegelradschneideinheit (21),
Eine Zahnradschneid-und Schraubenfräseinheit (22),
Eine Schleifeinheit (23; 23'),
Eine orbitale Dreheinheit (24),
Eine Spezialeinheit (25) zur Wärmebehandlung,
Eine Abstützeinheit (26; 26') mit einer Stütze (260; 260'), die so befestigt sind,
um auf derselben Arbeitsführung (42) zu gleiten, und entlang der Führung (42) unabhängig von einander beweglich sind.

## Revendications

1. Machine-outil modulaire multifonction pour procédés d'usinage intégrés, comprenant une poupée principale (30) appropriée pour maintenir une pièce à usiner (P) afin de la disposer à l'intérieur d'un espace de travail (A) et pour réaliser une rotation (CC1) de la pièce (P) autour d'un axe principal (ZZ1) pendant différentes opérations d'usinage, un premier guide de travail (41) qui supporte une unité de tournage ou à outils multiples (10) et au moins un autre guide de travail (42), lesdits guides de travail (41, 42) s'étendant dans une direction sensiblement parallèle audit axe principal (ZZ1), **caractérisée en ce qu'**elle comprend un outil pour des procédés d'usinage de fraisage de vis et/ou de fraisage de roues coniques (210) et un outil pour des procédés d'usinage de taille de dentures d'engrenages cylindriques (220) qui sont associés avec au moins une autre unité de travail (21, 22, 22') mobile sur ledit guide de travail supplémentaire (42), ledit outil pour procédés d'usinage de fraisage de vis et/ou de fraisage de roues coniques (210) et ledit outil pour procédés d'usinage de taille de dentures d'engrenages coniques (220) étant mobile sur ledit guide de travail supplémentaire (42) au moyen de mouvements de translation, afin de pouvoir être disposés, de manière alternée et indépendante l'un de l'autre, à l'intérieur dudit espace de travail (A), afin d'intervenir sur la pièce à usiner (P) ou à l'extérieur dudit espace de travail (A).

2. Machine-outil selon la revendication 1, dans laquelle ledit outil pour procédés d'usinage de fraisage de vis et/ou de fraisage de roues coniques (210) et ledit outil pour procédés d'usinage de taille de dentures d'engrenages coniques (220) sont montés sur une seule unité de fraisage et de taille des engrenages (22').

3. Machine-outil selon la revendication 2, dans laquelle ledit outil pour procédés d'usinage de fraisage de vis et/ou fraisage de roues coniques (210) et ledit outil pour procédés d'usinage de taille de dentures d'engrenages coniques (220) peuvent tourner sur le même axe de rotation (B1).

4. Machine-outil selon la revendication 2 ou 3, dans laquelle ledit outil pour procédés d'usinage de fraisage de vis et/ou de fraisage de roues coniques (210) a un plus grand diamètre que ledit outil pour procédés d'usinage de taille de dentures d'engrenages coniques (220).

5. Machine-outil selon l'une quelconque des revendications 2 à 4, dans laquelle ladite unité de fraisage et de taille des engrenages (22') comprend une base (223) mobile sur ledit guide (42) qui supporte une poupée de travail (221) qui comprend un support allongé (222) pour supporter une extrémité dudit outil pour procédés d'usinage de fraisage de vis et/ou de fraisage de roues coniques (210) ou dudit outil pour procédés d'usinage de taille de dentures d'engrenages coniques (220).

6. Machine-outil selon l'une quelconque des revendications 2 à 5, dans laquelle ledit outil pour procédés d'usinage de fraisage de vis et/ou fraisage de roues coniques (210) et ledit outil pour procédés d'usinage de taille de dentures d'engrenages coniques (220) sont produits d'un seul tenant respectivement sous la forme d'une fraise et d'une fraise-mère sur un outil allongé (200).

7. Machine-outil selon la revendication 1, dans laquelle ledit outil pour procédés d'usinage de fraisage de vis et/ou fraisage de roues coniques (210) et ledit outil pour procédés d'usinage de taille de dentures d'engrenages coniques (220) sont supportés sur deux unités de travail (21, 22) respectives, le mouvement desdites deux unités de travail (21, 22) étant coordonné au moins avec la rotation (CC1) de la pièce (P), lesdites au moins deux unités de travail (21, 22) pouvant coulisser indépendamment sur ledit guide d'unité de travail (42) de sorte qu'elles peuvent être disposées, de manière alternée et indépendante l'une de l'autre, à l'intérieur dudit espace de travail (A), afin d'intervenir sur la pièce à usiner (P) ou à l'extérieur dudit espace de travail (A).

8. Machine-outil selon l'une quelconque des revendications précédentes, dans laquelle ladite poupée principale (30) est disposée sur un guide de poupée (43) et est associée à une contre-poupée (31), ladite contre-poupée (31) pouvant coulisser sur ledit guide de poupée (43) afin de pouvoir effectuer le maintien de la pièce (P) de manière alternée au moyen de moyens de support (310) et libérer une extrémité de la pièce (P) afin de réaliser des procédés d'usinage dans la région de ladite extrémité.

9. Machine-outil selon l'une quelconque des revendications précédentes, dans laquelle lesdits guides (41, 42, 43) sont parallèles entre eux.

10. Machine-outil selon la revendication 8 ou 9, comprenant une commande numérique appropriée pour coordonner le mouvement desdites deux unités de travail (21, 22) avec la rotation (CC1) de la pièce (P) afin de réaliser une séquence prédéterminée de procédés d'usinage en une seule prise de la pièce (P) sur ladite poupée principale (31).

11. Machine-outil selon l'une quelconque des revendications 8 à 10, dans laquelle au moins l'une (22) desdites unités de travail (21, 22) a un axe de travail principal (C3) d'un outil (220) correspondant pouvant être orienté afin de définir des angles d'inclinaison (, β) par rapport à l'axe de rotation (ZZ1) de la pièce à usiner (P) qui sont variables selon le type de procédé d'usinage réalisé et/ou pendant l'usinage lui-même.

12. Machine-outil selon l'une quelconque des revendications 8 à 11, dans laquelle ledit guide de travail (42) comprend une section de stationnement (42") à l'intérieur de laquelle une unité de travail est placée lorsque l'autre unité de travail usine la pièce (P).

13. Machine-outil selon l'une quelconque des revendications précédentes, comprenant en outre une unité de support (26; 26') avec un support (260; 260') monté sur ledit au moins un guide de travail (42) et appropriée pour être disposée en variante dans l'espace de travail (A) afin de fournir le support pour la pièce (P) tandis qu'elle est usinée ou à l'extérieur de l'espace de travail (A).

14. Machine-outil selon l'une quelconque des revendications précédentes, comprenant deux unités ou plus parmi lesquelles: une unité pour procédés d'usinage de tournage et/ou fraisage et/ou perçage (10; 11), une unité de taille de dentures d'engrenages cylindriques et de fraisage de roues coniques (21), une unité de taille d'engrenages et de fraisage de vis (22), une unité de fraisage (23; 23'), une unité de rotation orbitale (24), une unité spéciale (25) pour traitement thermique, une unité de support (26; 26') avec un support (260; 260'), qui sont montées afin de coulisser sur le même guide de travail (42) et sont mobiles le long dudit guide (42) indépendamment les unes des autres.
